# EUROPEAN PATENT APPLICATION

(11) **EP 4 537 660 A1**
(43) Date of publication of application: **16.04.2025**
(21) Application number: 24206183.6
(22) Date of filing: 11.10.2024
(51) Int. Cl.: A01M 1/04

(54) **SYSTEMS FOR DETERMINING PEST MANAGEMENT ILLUMINATION PATTERNS AND ASSISTING PEST MANAGEMENT IN CONTROLLED ENVIRONMENT AGRICULTURE AND RELATED METHODS**

(30) Priority: 12.10.2023 US 202363589813 P; 12.10.2023 US 202363589837 P
(71) Applicant: Sollum Technologies Inc., Montréal, Québec H3C 3X6 (CA)
(72) Inventor: ROY-MOISAN, François, Montreal, H3C 3X6 (CA); BRUN, Louis, Montreal, H3C 3X6 (CA); TREMBLAY, Marc, Montreal, H3C 3X6 (CA)
(74) Representative: Lavoix

(57) **Abstract**

There is provided a method for determining pest management illumination patterns including defining a control zone, the control zone being associated with a first light source, the first light source being configured to illuminate a control plant or crop according to a control lighting scenario; in the control zone, illuminating the control plant or crop with the first light source according to the control lighting scenario; defining test zones, each test zone being associated with a horticultural light source; for each test zone of the test zones: identifying an undesirable organism; providing a natural predator to the undesirable organism in the test zone; and illuminating a test plant or crop according to a corresponding test lighting scenario with the light source, the test lighting scenario having test optical property affecting a behavior of the natural predator.

## Description

### TECHNICAL FIELD

The technical field generally relates to lighting, and more particularly concerns techniques for determining pest illumination patterns and assisting pest management in controlled agricultural environment.

### BACKGROUND

Many plants or crops can grow in horticultural structures such as, for example, greenhouses. However, plants or crops growing in such an environment can easily be affected by the presence of undesirable organisms, which can decimate the production of the horticultural structure. Options for managing pest or undesirable organisms, which can be a threat to plants or crops in the context of controlled environment agriculture, are often limited or simply not optimized for the productor's needs. Therefore, it remains challenging to develop techniques that would help managing or controlling the presence of undesirable organisms which may negatively affect the plants or crops growing within a horticultural structure.

There is a need for techniques that can provide improvements in methods and systems assisting the pest management in controlled environment agriculture.

### SUMMARY

In accordance with one aspect, there is provided a method for determining pest management illumination patterns within a horticultural structure, including defining a control zone within the horticultural structure, the control zone being associated with a first horticultural light source, the first horticultural light source being configured to illuminate a control plant or crop according to a control lighting scenario; in the control zone, illuminating the control plant or crop with the first horticultural light source according to the control lighting scenario; defining a plurality of test zones within the horticultural structure, each test zone being associated with a corresponding horticultural light source; for each test zone of the plurality of test zones: identifying an undesirable organism in the test zone; providing a natural predator to the undesirable organism in the horticultural structure to affect the presence of the undesirable organism the test zone; and illuminating a respective test plant or crop according to a corresponding test lighting scenario with said corresponding horticultural light source, the corresponding test lighting scenario having at least one test optical property affecting a behavior of the natural predator, said at least one test optical property being different from one test zone to another.

In some embodiments, the method further includes monitoring an impact of said at least one test optical property on the undesirable organism and/or the natural predator in the corresponding test zone.

In some embodiments, the method includes comparing the impact of said at least one test optical property to determine the pest illumination patterns to be used to reduce or eliminate a population of the undesirable organisms.

In some embodiments, defining the control zone includes creating the control zone, delimiting the limits of the control zone and/or adjusting the dimensions of the control zone.

In some embodiments, defining the plurality of test zones includes creating the plurality of test zones, delimiting the limits of plurality of test zones and/or adjusting the dimensions of the plurality of test zones.

In some embodiments, the method includes adjusting the control lighting scenario and/or the corresponding test lighting scenario, based on a correlation between illumination conditions during the control lighting scenario and the corresponding test lighting scenario and impacts of the illumination conditions on the presence or absence of the undesirable organisms.

In accordance with one aspect, there is provided a system for determining pest management illumination patterns within a horticultural structure, the system including a first horticultural light source configured to illuminate a control plant or crop according to a control lighting scenario in a control zone; a plurality of test horticultural light sources in a plurality of test zones, each being configured to illuminate a respective test plant or crop according to a corresponding test lighting scenario in a corresponding test zone, the corresponding test lighting scenario having at least one test optical property affecting a behavior of a natural predator to an undesirable organism in the test zone, said at least one test optical property being different from one test zone to another; at least one controller in data communication with the first horticultural light source, the plurality of horticultural light sources and said at least one sensor, said at least one controller being configured for: defining the control zone within the horticultural structure; defining a plurality of test zones within the horticultural structure; providing the control lighting scenario to the first horticultural light source in the control zone and the corresponding test lighting scenario to the corresponding horticultural light source.

In some embodiments, the system includes at least one sensor configured to monitor an impact of said at least one test optical property on an undesirable organism and/or a natural predator in the corresponding test zone in the plurality of test zones.

In some embodiments, said at least one controller is configured to compare the impact of said at least one test optical property to determine the pest illumination patterns to be used to reduce or eliminate a population of the undesirable organisms.

In some embodiments, the system includes one or more sensors configured to detect characteristics associated with the natural predators.

In some embodiments, the characteristics comprise at least one of a species of the natural predator, a sex of the natural predator and a physiological state of the natural predator.

In accordance with one aspect, there is provided a non-transitory computer readable storage medium having stored thereon computer executable instructions that, when executed by a processor, cause the processor to perform the methods herein disclosed, or at least one step of the methods.

In accordance with one aspect, there is provided a method for assisting pest management within a horticultural structure, the method including: defining a first zone within the horticultural structure, the first zone being associated with a first horticultural light source, the first horticultural light source being configured to illuminate a first group of plants or crops according to a lighting scenario; defining a second zone within the horticultural structure, the second zone being associated with a second horticultural light source, the second horticultural light source being configured to illuminate a second group of plants or crops according to a pest management lighting scenario, the pest management lighting scenario having at least one pest-mitigating feature affecting an undesirable organism present in the second zone; in the first zone, illuminating the first group of plants or crops with the first horticultural light source according to the lighting scenario; and in the second zone, illuminating the second group of plants or crops with the second horticultural light source according to the pest control lighting scenario.

In some embodiments, the method includes monitoring a distribution of undesirable organism within the second zone to determine whether said at least one pest-mitigating feature affects the distribution of undesirable organism within the second zone in comparison with the first zone.

In accordance with one aspect, there is provided a system for assisting pest management within a horticultural structure, the system including: a first horticultural light source configured to illuminate a first group of plants or crops according to a lighting scenario; a second horticultural light source configured to illuminate a second group of plants or crops according to a pest management lighting scenario, the pest management lighting scenario having at least one pest-mitigating feature affecting an undesirable organism present in the second zone; and at least one controller in data communication with the first horticultural light source, the second horticultural light source and said at least one sensor, said at least one controller being configured for: defining the first zone within the horticultural structure; and defining the second zone within the horticultural structure.

In some embodiments, the system includes at least one sensor configured to monitor a distribution of undesirable organism within the second zone to determine whether said at least one pest-mitigating feature affects the distribution of undesirable organism within the second zone in comparison with the first zone.

In accordance with one aspect, there is provided a non-transitory computer readable storage medium having stored thereon computer executable instructions that, when executed by a processor, cause the processor to perform the methods herein disclosed, or at least one step of the methods.

Other features and advantages of the method and system described herein will be better understood upon a reading of preferred embodiments thereof with reference to the appended drawings. Although specific features described in the above summary and in the detailed description below may be described with respect to specific embodiments or aspects, it should be noted that these specific features can be combined with one another unless stated otherwise.

### BRIEF DESCRIPTION OF THE DRAWINGS

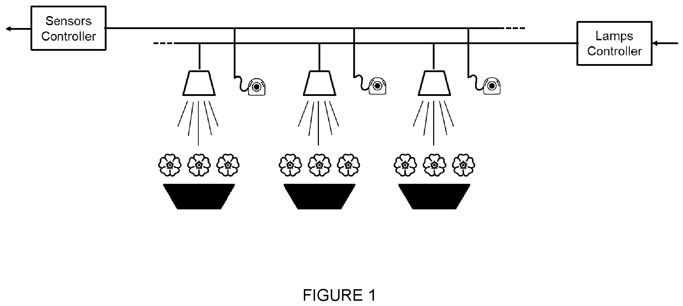

Figure 1 is an example of a system for determining pest management illumination patterns within a horticultural structure.

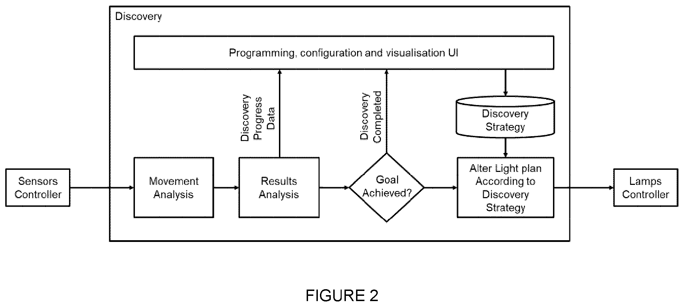

Figure 2 is a diagram illustrating the working mechanism of a system for determining pest management illumination patterns within a horticultural structure, in accordance with one embodiment.
Figure 3 illustrates a spectral distribution that can be generated by the present techniques.
Figure 4 is an example of the system illustrated in Figure 1, in which natural predators have been released.
Figure 5 is an example of the system illustrated in Figure 1, in which natural predators have been released.
Figure 6 is an example of a horticultural structure, in accordance with one embodiment.
Figure 7 is another example of a horticultural structure, in accordance with one embodiment.

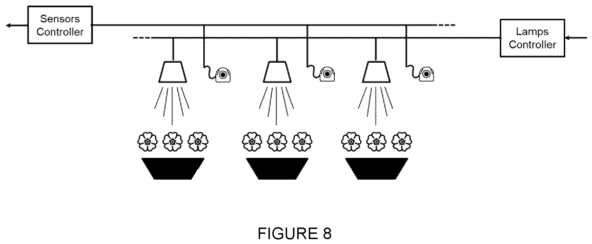

Figure 8 is an example of a system for assisting pest management with illumination patterns within a horticultural structure.

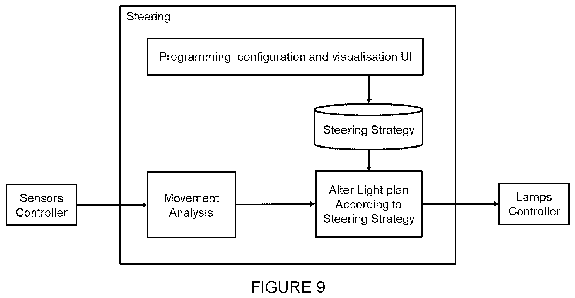

Figure 9 is a diagram illustrating the working mechanism of a system for assisting pest management with illumination patterns within a horticultural structure, in accordance with one embodiment.

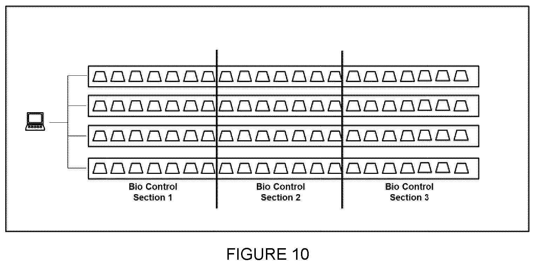

Figure 10 is an example of a horticultural structure, in accordance with one embodiment.

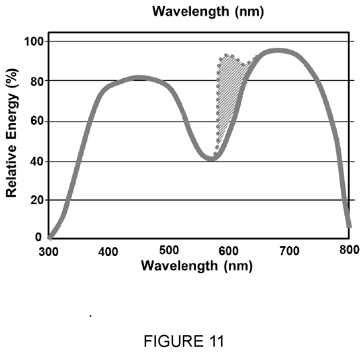

Figure 11 illustrates a spectral distribution that can be generated by the present techniques.

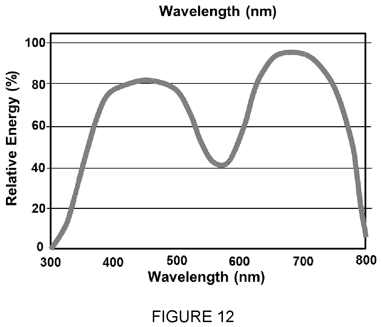

Figure 12 illustrates another spectral distribution that can be generated by the present techniques.

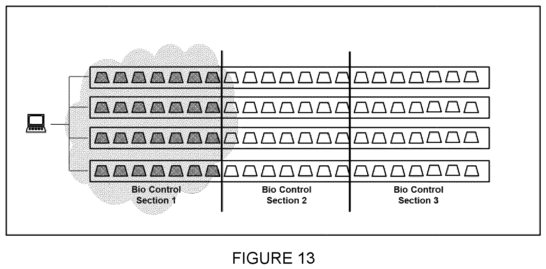

Figure 13 is another example of a horticultural structure, in accordance with one embodiment.

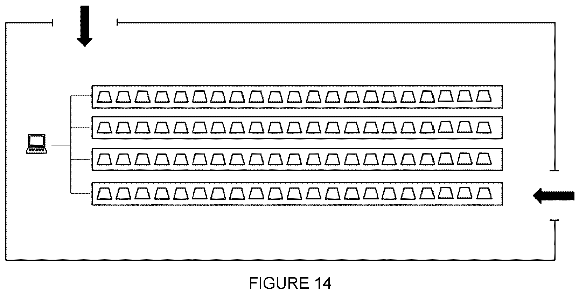

Figure 14 is another example of a horticultural structure, in accordance with one embodiment, illustrating the propagation of natural predators within the horticultural structure.

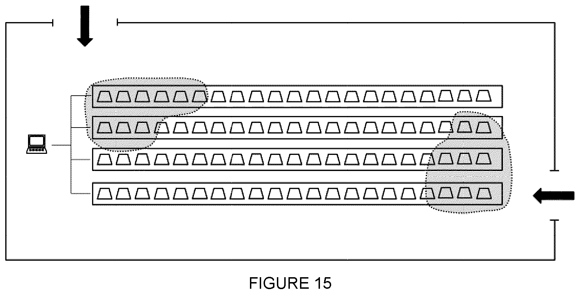

Figure 15 is another example of a horticultural structure, in accordance with one embodiment, illustrating the propagation of natural predators within the horticultural structure.

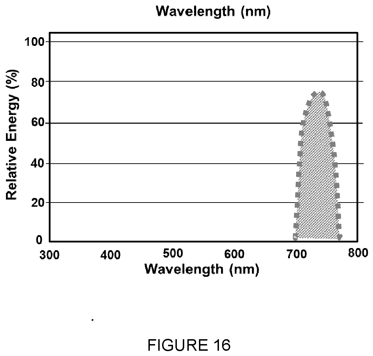

Figure 16 illustrates a spectral distribution that can be generated by the present techniques.

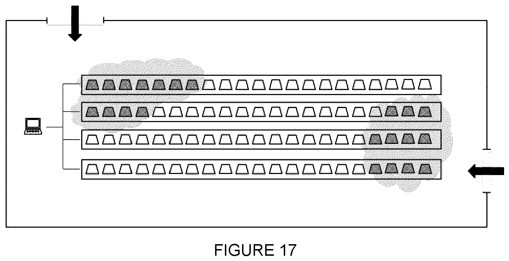

Figure 17 is another example of a horticultural structure, in accordance with one embodiment, illustrating the propagation of natural predators within the horticultural structure.

### DETAILED DESCRIPTION

In the present description, similar features in the drawings have been given similar reference numerals. To avoid cluttering certain figures, some elements may not have been indicated if they were already identified in a preceding figure. It should also be understood that the elements of the drawings are not necessarily depicted to scale, since emphasis is placed on clearly illustrating the elements and structures of the present embodiments. Furthermore, positional descriptors indicating the location and/or orientation of one element with respect to another element are used herein for ease and clarity of description. Unless otherwise indicated, these positional descriptors should be taken in the context of the figures and should not be considered limiting. More particularly, it will be understood that such spatially relative terms are intended to encompass different orientations in the use or operation of the present embodiments, in addition to the orientations exemplified in the figures.

The terms "a", "an" and "one" are defined herein to mean "at least one", that is, these terms do not exclude a plural number of items, unless stated otherwise.

Terms such as "substantially", "generally" and "about", that modify a value, condition or characteristic of a feature of an exemplary embodiment, should be understood to mean that the value, condition or characteristic is defined within tolerances that are acceptable for the proper operation of this exemplary embodiment for its intended application.

Unless stated otherwise, the terms "connected" and "coupled", and derivatives and variants thereof, refer herein to any structural or functional connection or coupling, either direct or indirect, between two or more elements. For example, the connection or coupling between the elements may be acoustical, mechanical, optical, electrical, thermal, logical, or any combinations thereof.

The terms "match", "matching" and "matched" are intended to refer herein to a condition in which two elements are either the same or within some predetermined tolerance of each other. That is, these terms are meant to encompass not only "exactly" or "identically" matching the two elements but also "substantially", "approximately" or "subjectively" matching the two elements, as well as providing a higher or best match among a plurality of matching possibilities.

In the present description, the expression "based on" is intended to mean "based at least partly on", that is, this expression can mean "based solely on" or "based partially on", and so should not be interpreted in a limited manner. More particularly, the expression "based on" could also be understood as meaning "depending on", "representative of", "indicative of", "associated with" or similar expressions.

It should be noted that, in the context of the current disclosure, the expression "plant(s) or crop(s)" may encompass a broad variety of multicellular organisms, including photosynthetic eukaryotes. Non limitative examples of plant(s) or crop(s) are seedlings, ornamental crops, ornamental plants, plugs, liners, fruits, small fruits, vegetables, leafy greens, herbs, young plants, high-value crops, animals and many others. The plants or crops may be produced for human food, non-human food or non-food applications. The growing process of the plants or crops generally includes a plurality of subsequent plant growth stages, such as, for example, seed germination (or "sprout"), seedling, vegetative, bud stage (or "budding"), flowering and ripening. It should be understood that, in the present description, the plants or crops can be at any one of the plant growth stages or at a transition between any two subsequent growth stages.

The expression "horticultural light", synonyms and derivatives thereof will be used throughout the present disclosure, and refers to the use of optical techniques, systems, and methods for assisting, maintaining, stimulating and/or optimizing plants or crops growth. The horticultural light may irradiate or illuminate the plants or crops during any one of the plant growth stages. The horticultural light, which is the light generated by the horticultural lighting apparatus, may be produced or generated using an artificial light source or similar devices, apparatuses, and systems. Non-limiting examples of artificial light sources include incandescent light sources, fluorescent light sources, high-intensity discharge (HID) light sources such as mercury vapor, metal halide (MH), high-pressure sodium (HPS) and low-pressure sodium (LPS) light sources, solid-state light sources including LED light sources, and laser sources. The horticultural light is associated with an illumination spectrum or profile. In some implementations, the horticultural light produced by the horticultural lighting apparatus have a profile substantially similar to light reaching the crop or plant. The expression "illumination spectrum" is used to broadly refer to the spectral power distribution of an illumination. The illumination spectrum can represent the distribution of power radiated per unit area and per unit wavelength or frequency over a spectral region of the electromagnetic spectrum. It should be noted that using horticultural light may be used to irradiate or illuminate plants or crops growing in a horticultural structure providing regulated climatic conditions to the plants or crops. Nonlimitative examples of horticultural structures include greenhouse, glasshouse and hothouse.

In the present description, the terms "light" and "optical", and variants and derivatives thereof, are used to refer to radiation in any appropriate region of the electromagnetic spectrum. The terms "light" and "optical" are therefore not limited to visible light, but can also include, without being limited to, the infrared and ultraviolet regions. For example, in some implementations, the present techniques can be used with electromagnetic signals having wavelengths ranging from about 250 nm to about 2500 nm. However, this range is provided for illustrative purposes only and some implementations of the present techniques may operate outside this range. Also, the skilled person will appreciate that the definition of the ultraviolet, visible and infrared ranges in terms of spectral ranges, as well as the dividing lines between them, can vary depending on the technical field or the definitions under consideration, and are not meant to limit the scope of applications of the present techniques.

The expressions "natural light" or "natural light conditions" generally refer to light having spectral characteristics corresponding or similar to those of sunlight, moonlight or starlight. The spectral profile of natural light, particularly sunlight, varies as a function of geographic location, time of day, time of year, weather, cloud coverage, and several other factors. Several standards are known in the art to provide a spectral reference for natural light. For example, the Commission internationale de l'eclairage (CIE) has established the D series of well-defined daylight standard illuminants representing natural light under different conditions. One well-known standard is CIE Standard Illuminant D65, which is a daylight illuminant that intends to represent the average midday light in Western or Northern Europe. Other examples of CIE Standard Illuminants for daylight include the D50, D55, and D75 standard illuminants. Sunlight, which refers to the total spectrum of electromagnetic radiation emitted by the Sun and reaching the Earth, has a broad spectral range including ultraviolet radiation, visible light, and infrared radiation. Accordingly, standard illuminants extend within the solar radiation spectrum. For example, Standard Illuminant D65 extends from 300 nm to 830 nm. Non-limiting examples of natural light sources include sunlight, moonlight, starlight, twilight, lightning, and firelight.

In the present description, the term "solid-state light emitter" refers to any light-emitting device that converts electrical energy into electromagnetic radiation through the recombination of electronic carriers (i.e., electrons and holes) in a light emitting layer or region. The emitting layer or region can include, but is not limited to, silicon, silicon carbide, gallium nitride and/or other semiconductor materials, and may or may not include a substrate such as sapphire, silicon, silicon carbide and/or other microelectronic substrates. The solid-state light emitters can include both inorganic and organic light emitters, many of which are known to the skilled person and need not be described in detail herein. Non-limiting examples of types of solid-state light emitters include semiconductor light-emitting diodes (LEDs), semiconductor laser diodes, vertical cavity surface emitting lasers (VCSELs), other semiconductor light emitting devices or lamps, organic light-emitting diodes (OLEDs), and polymer light-emitting diode (PLEDs).

The expression "lighting scenario" is understood to refer to the generation of light, such as for illuminating purposes, according to predetermined optical characteristics (e.g., spectral content, intensity, polarization) that may, in some instances, change, vary or evolve over time during a given time period. In other instances, the predetermined optical characteristics may remain constant, unchanged or not significantly evolve over time, during a given duration or period, (e.g., during a cycle or a portion of the lighting scenario). The embodiments wherein the optical characteristics change, vary or evolve over time may sometimes be referred to as "dynamic lighting scenario". The embodiments wherein the optical characteristics remain constant, unchanged or not significantly evolve may sometimes be referred to as "static lighting scenario". The expression "lighting scenario", which will be used throughout the present description, encompasses both variants, i.e., a dynamic lighting scenario and a static lighting scenario, as well as any combinations thereof. The optical characteristics of the generated light may correspond to or emulate those of natural lighting conditions. The natural light may emulate or be inspired from the actual light conditions experienced at a specific geographical location, date and time. It is appreciated that devising lighting scenarios that combine natural light conditions corresponding to different geographical locations is possible in some applications (e.g., a scenario could be build using sunrise, midday and sunset conditions corresponding to three distinct locations on Earth, at the same or different dates). In other embodiments, however, the natural light conditions may be different from real life conditions on Earth. By way of example, the spectrum of natural light generated according to the method described herein may differ from an actual spectral content of sunlight due to the absence of spectral components which are undesired or unnecessary in a given application context, or conversely by the enhancement or addition of wavelengths then are considered advantageous or required. The present techniques may rely on the use of solid-state light emitters. The solid-state light emitters can be driven to produce the lighting scenario using sets of control parameters. It should be noted that a plurality of lighting scenarios may be combined to collectively determine a "recipe" or a "recipe bundle". The recipe or the recipe bundle refers to a sequence of lighting scenarios.

In some embodiments, the lighting scenario may emulate lighting conditions over the course of a day, from dawn to dusk, or over a portion of a day. Indeed, the spectral contents of light reaching a particular location on earth from the Sun is not constant as the day progress. In some instances, it can be customary to characterize natural light according to its Correlated Color Temperature (CCT) value, expressed in Kelvin (K). By convention, the CCT is defined by the CIE as "the temperature of the Planckian radiator whose perceived color most closely resembles that of a given stimulus at the same brightness and under specified viewing conditions" (CIE/IEC 17.4:1987, International Lighting Vocabulary). Lower CCT values correspond to "warmer" light. Hence, a day with a clear blue sky can begin at dawn with light in a warm CCT spectrum range, such as between 1500K and 3000K, then progress to about 5000K to 7500K at mid-day and return to the 1500K to 3000K range towards dusk. In horticultural or agricultural applications, the light conditions in a region of the world from which a cultivated produce originates or where this produce is known to thrive can be emulated (e.g., growing tomatoes using light conditions from a sunny day in June in Tuscany). In other examples, the lighting conditions may be adapted in view of observations or discoveries regarding optimal or enhanced lighting conditions for growing a given agricultural output, such as for example to follow the McCree Curve, which represents the average photosynthetic response of plants to light energy.

### Natural Enemies and Pest Management

The present techniques relate to pest management, and more specifically to biological control and Integrated Pest Management (IPM), in the context of industrial greenhouse and controlled environment agriculture (CAE).

Biological control is the use of one or more types of living agents or organisms to suppress and/or control another. Beneficial organisms, also called "natural predators", used in biological control, include, for example and without being limitative, insects, mites, bacteria, fungi, nematodes and/or many others. The use of biological control can reduce or even eliminate the necessity of pesticides, which are most of the time undesirable, especially in the context of closed environments, such as greenhouses or similar horticultural structures.

Specific examples of diseases and related beneficial organisms used for their control can be found in Table 1 provided in the article "Common Greenhouse Pests and Biological Control Agents", which was published by the Oklahoma State University (accessible online, June 2023: https://extension.okstate.edu/fact-sheets/print-publications/hla/integrated-pest-management-in-commercial-greenhouses-an-overview-of-principles-and-practices-hla-6710.pdf).

Greenhouse and controlled growth environment operators use various strategies and techniques to select and introduce these beneficial organisms within their growth environment so that they act as natural predators to undesirable organisms without comprising their horticultural activities.

When providing natural predators in a horticultural structure, the operator or grower has limited control over what happens after their release within the controlled environment. Among some of the aspects that an operator would possibly want to have an improved level of control over are how the natural enemies propagate, where the natural enemies propagate, the speed of the natural enemies when moving within the horticultural structure, the concentration and sparsity of the natural enemies over the area, the activity levels of the natural enemies and the population (e.g., the number of natural enemies and/or a variation in the number of natural enemies).

It is known that beneficial organisms used in pest control have some kind of photoreceptors. Light, or absence thereof, perceived through these photoreceptors influence these organisms. It affects aspects, such as, but not limited to, physiology, behavioral patterns, development patterns, flight patterns of flying organisms, ability to reproduce, developmental decision making, metabolic reprogramming, pathogenesis and many more.

It is also known that colors and light may influence insect attraction and/or repulsion. In this regard, the International Patent Classification (IPC) includes a dedicated category directed to that technical domain, namely A01M 1/04, which relates to catching or killing insects using illumination or colors.

Many studies have been published on the influence of light on natural enemies. Colors are the wavelengths that are reflected or transmitted by an object. The object absorbs some wavelengths and reflects others. In the past, a researcher who wanted to experiment or study the effects of wavelengths on natural enemies was limited by the availability and characteristics of light sources and lighting technologies: incandescent, fluorescent, high-pressure sodium, and similar devices. To experiment with a wider spectrum of colors, an experimenter had to use matter to reflect and absorb wavelengths, in order to generate target perceived colors

The relatively young invention of the LED technology and recent breakthroughs in the ability to manufacture LEDs of various colors have made it possible to modulate the energy of individual wavelengths to create very specific visible and non-visible light spectrums. It hence becomes possible to discover and experiment with insects' behavioral response to wavelengths in ways that were not possible before.

The availability of connected growth lighting systems (see for example PCT/CA/2016/050076 and PCT/CA2019/051633) that are individually capable of variable intensity, modulable and dynamic spectrums represents new opportunities for the growers. Indeed, it becomes possible to use the light generated by the artificial lighting systems to discover and alter natural enemies or natural predators' behavior to guide and optimize their predatory work within the grow area.

Dynamic grow lights can be globally and individually controlled to provide light patterns aiming at inhibiting undesirable insects' behaviors, or to stimulate desirable behaviors, while simultaneously providing a light spectrum capable of generating photosynthetic growth of the plants or crops. For instance, the light spectrum emitted by a group of specific lamp fixtures could be modulated to attract natural predators toward specific or determined locations or specific or determined plant clusters. This could be used for ensuring a uniform predatory effort across the crop, to achieve targeted pest control or to keep natural enemies away from specific sections of the grow area. The generated light spectrum can be modulated so that it combines both the wavelengths needed to achieve the desired photosynthetic growth and the wavelength required to alter the behavior of beneficial organisms, thus enabling proper plant growth simultaneously with pest control.

In light of the above, one of the objectives of the present system is to automate the discovery, learning, understanding and development of strategies for achieving steering of natural predators.

Such a system can be operated within a laboratory to research and develop steering strategies and knowledge that can be reproduced within a target production facility. Alternatively, it could be operated directly within a production facility, integrated as part of production cycle. This option is also desirable considering that every single controlled growth environment, with its crop genetic particularities, natural predators' genetics, its lightning characteristics, its climate, and many others, has its own unique characteristics and challenges.

In accordance with one aspect, there is provided a system to achieve that discovery purpose. This will make it possible to fully harness the potential of using light to optimize the desired behaviors of natural predators. Tools and methodologies enabling the discovery of light patterns and strategies will be presented not only in a laboratory environment but in the production environment as well. The present techniques also allow harnessing the potential of using light to optimize the desired behaviors of natural enemies to affect the presence of undesirable organisms within the horticultural structure.

The present description relates to an automated system enabling the experimental discovery and classification of static and dynamic light patterns capable of managing or controlling natural enemies toward a specific location within the controlled agriculture environment, retaining natural enemies at a specific location within the controlled environment, stimulating their predatory work at a specific location and repulsing natural enemies from a specific location.

### Determining Pest Management Illumination Patterns

In accordance with one aspect, there is provided a system for determining pest management illumination patterns within a horticultural structure. The system includes a first horticultural light source configured to illuminate a control plant or crop according to a control lighting scenario. The system also includes a plurality of test horticultural light sources. Each test horticultural light source is configured to illuminate a respective test plant or crop according to a corresponding test lighting scenario in a corresponding test zone. The corresponding test lighting scenario has at least one test optical property affecting a behavior of the natural predator. The test optical property is different (i.e., is not the same) from one test zone to another. The system optionally includes at least one sensor configured to monitor an impact of said at least one test optical property on an undesirable organism and/or a natural predator in the corresponding test zone. The system also includes at least one controller in data communication with the first horticultural light source, the plurality of horticultural light sources and said at least one sensor. The controller is configured for defining a control zone within the horticultural structure; defining a plurality of test zones within the horticultural structure; and comparing the impact of said at least one test optical property to determine the pest illumination patterns to be used to reduce or eliminate a population of the undesirable organisms.

In some embodiments, the system includes at least two lamp fixtures adapted to generate variable spectrum output and/or have variable intensity capabilities. In these embodiments, the system may also include one or more sensors adapted to detect the presence and activity of natural predators, and their relative location in relation with the lamp fixtures (as illustrated in US 2021/0360204). Optionally, the system may include one or more sensors adapted to detect characteristics associated with the natural predators, such as species, sex, physiological state, and other characteristics. In these embodiments, the system includes a first controller capable of controlling individual fixtures' visible and non-visible light spectrum output and intensity and a second controller capable of receiving sensor information. Of note, the first and second controllers could be implemented in a single controller or could otherwise be independent one from another. In these embodiments, the lamps fixtures, sensors and controllers are in data communication, using either wired connections or wireless connections. It should be noted that the expression "data communication" may refer to any types of direct connection and/or indirect connection. For example, the communication between the elements may be achieved through direct communication such as a wired connection or via a network allowing data communication between devices or components of a network capable of receiving and/or sending data, which may include, to name a few, publicly accessible networks of linked networks, possibly operated by various distinct parties, such as the Internet, private networks (PN), personal area networks (PAN), local area networks (LAN), wide area networks (WAN), cable networks, satellite networks, cellular telephone networks and the like, or any combinations thereof.

In some embodiments, the system also includes a user interface allowing an end user to enter a pattern discovery strategy, for instance, in the form of a programming language or a visual programming interface. The system can be programmed to use techniques such as logic programming, trial and error, statistical correlation, machine learning, deep learning and any other learning strategy to perform the discovery process. In these embodiments, the system also includes a processor capable of using the sensor data to measure natural predators' response to the light patterns with regards to natural predator's attraction, retention, stimulation and repulsion, alter and execute light patterns on lamps fixtures.

The embodiments of the horticultural structure illustrated in the Figures include at least two zones, namely the control zone and the test zone. Each zone may include one or more rows of plants or crops. Each zone is designed or configured to accommodate the plants or crops during one or more plant growth stages (or portions thereof).

In some embodiments, the first and second horticultural light sources may be embodied by a lamp similar to the lighting system described in WO 2016119063, the content of which is incorporated herein by reference.

The controller(s) are configured to send illumination instructions to one of the horticultural light sources, such that the corresponding horticultural light source is driven according to a lighting scenario to meet the lighting conditions of the plants or crops. In some embodiments, each horticultural light source includes a dedicated controller, and each dedicated controller is operatively connected to a user interface. The user interface may be configured to select one of horticultural light source, receive information about the illumination sequence or the lighting scenario being provided by the selected horticultural light source during portion(s) of a lighting scenario and/or send illumination instructions to the selected horticultural light source. As such, the user interface may be in data communication with each dedicated controller of the horticultural light sources through a corresponding communication channel. Of note, the dedicated controller of each horticultural light source may communicate with the user interface over a network. The term "network", synonyms and derivatives thereof are used to refer to any classes of network, which includes publicly accessible networks of linked networks, possibly operated by various distinct parties, such as the Internet, private networks, personal area networks, local area networks, wide area networks, cable networks, satellite networks, cellular telephone networks or any combinations thereof.

In some embodiments, the user interface may be a graphical user interface. In some embodiments, the user interface may be a conversational interface, which may rely on natural language, text-activated commands and/or voice-activated commands. The user interface is operatively connected to at least one of the horticultural lighting sources through at least one controller to allow a user to interact with the horticultural lighting sources. In some embodiments, the user interface may be displayed on a display or a screen. In some embodiments, the graphical user interface may be part of a web-based application that may be accessed and displayed using a computing device connected to the Internet or any types of networks. The user interface may also be configured to illustrate the paths followed by the natural enemies and/or undesirable organisms, or mapping of the same, which may help identifying optimal lighting conditions managing the presence of pest or natural enemies and/or undesirable organisms in a horticultural structure.

In some embodiments, the system may include a memory, or may include or be connected to a database (*e*.*g*., through the controller) to store past lighting scenarios or illumination conditions of the plants or crops, calibration data, other relevant data, as well as the impacts of these parameters on the presence or absence of undesirable organisms within the horticultural structure. In some embodiments, the lighting scenarios may be provided in a dataset including a plurality of sets of control parameters for the horticultural light sources. Each set of control parameters may be associated to an illumination state of the horticultural light source, and associated with the impact on the pest management or control of the presence of undesirable organisms within the horticultural structure. The dataset may be stored as a relational database and may have a database format commonly used in the art, such as, for example and without being limitative, CSV/SCSV, SQL, NoSQL, Graph DB, Object Oriented DB, Tabular DB, Large Language Model (LLM), or the like. The dataset may comprise textual information, numeral information, time information, date information, image information, and any combinations thereof. In the context of controlling horticultural light, the control parameters may include the different driving parameters of the horticultural light.

The system having been described may be implemented in computer programs executed on programmable computers. A programmable computer generally includes at least a processor and a data storage system that may include volatile and non-volatile memory and/or storage elements. The programmable computer may be a programmable logic unit, a mainframe computer, server, and personal computer, cloud-based program or system, laptop, personal data assistance, cellular telephone, smartphone, wearable device, tablet device, virtual reality devices, smart display devices, set-top box, video game console, portable video game devices, or virtual reality device. In some embodiments, the systems and methods may be provided as a plug-in. In some embodiments, one or more components of the system having been described may be provided as a plug-in. The expression "plug-in" herein refers to a software component adding a predetermined feature or functionality to the system. Providing the different modules as plug-ins may be associated with some benefits, such as, for example and without being limitative, adaptability, modularity and flexibility.

Of note, the computer programs may be implemented in a high-level procedural or object-oriented programming and/or scripting language to communicate with a computer system. The programs could alternatively be implemented in assembly or machine language, if desired. In these implementations, the language may be a compiled or interpreted language. The computer programs are generally stored on a storage media or a device readable by a general or special purpose programmable computer for configuring and operating the computer when the storage media or device is read by the computer to perform the procedures described herein. In some embodiments, the systems may be embedded within an operating system running on the programmable computer.

In accordance with one aspect, there is provided a method for determining pest management illumination patterns within a horticultural structure.

The method includes a step of defining a control zone within the horticultural structure, the control zone being associated with a first horticultural light source, the first horticultural light source being configured to illuminate a control plant or crop according to a control lighting scenario.

The method includes a step of, in the control zone, illuminating the control plant or crop with the first horticultural light source according to the control lighting scenario.

The method includes a step of defining a plurality of test zones within the horticultural structure, each test zone being associated with a corresponding horticultural light source.

The method includes a step of, for each test zone of the plurality of test zones, identifying an undesirable organism in the test zone; providing a natural predator to the undesirable organism in the horticultural structure to affect the presence of the undesirable organism in the test zone; and illuminating a respective test plant or crop according to a corresponding test lighting scenario with said corresponding horticultural light source, the corresponding test lighting scenario having at least one test optical property affecting a behavior of the natural predator, said at least one test optical property being different from one test zone to another. In some embodiments, the method includes monitoring an impact of said at least one test optical property on the undesirable organism and/or the natural predator in the corresponding test zone.

In some embodiments, the method includes a step of comparing the impact of said at least one test optical property to determine the pest illumination patterns to be used to reduce or eliminate a population of the undesirable organisms, or at least a portion thereof.

In some embodiments, the method may include defining the control zone and the test zone may include creating the zones, delimiting their limits, adjusting their dimensions, and the like. These steps may be carried out through the user interface, which may rely on text-activated commands and/or voice-activated commands, as indicated above. The zones may be determined using computer programs and/or vocal recognition-based approaches (*e*.*g*., vocal commands). For example, the user interface may be configured to display a representation of the horticultural structure and the horticultural light sources, interact with the representation of the horticultural structure (and components). The user interface may further be configured to create, delete, duplicate, replicate, edit and/or reorganize the zones, based on the plants or crops present in the horticultural structure and their needs.

In some embodiments, the method may include monitoring or tracking the lighting scenarios or recipes according to which the horticultural lighting sources are driven to provide information on the past, actual and/or forecasted lighting scenarios. This information may be correlated with one or more effects on the population of undesirable organisms within the horticultural structure. In some embodiments, the method may include editing or adjusting the lighting scenario based on the correlation between the illumination conditions during the lighting scenarios (*i*.*e*., control lighting scenario and test lighting scenario) and their impacts on the presence of pest or undesirable organisms.

In accordance with another aspect of the present description, there is provided a non-transitory computer readable storage medium having stored thereon computer executable instructions that, when executed by a processor, cause the processor to perform the methods that have been previously described. The non-transitory computer storage medium can be integrated to the systems or assemblies that have been described in the present description. The non-transitory computer storage medium could otherwise be operatively connected with the systems or assemblies. In the present description, the terms "computer readable storage medium" and "computer readable memory" are intended to refer to a non-transitory and tangible computer product that can store and communicate executable instructions for the implementation of various steps of the method disclosed herein. The computer readable memory can be any computer data storage device or assembly of such devices, including random-access memory (RAM), dynamic RAM, read-only memory (ROM), magnetic storage devices such as hard disk drives, solid state drives, floppy disks and magnetic tape, optical storage devices such as compact discs (CDs or CDROMs), digital video discs (DVD) and Blu-Ray^{™} discs; flash drive memory, and/or other non-transitory memory technologies. A plurality of such storage devices may be provided, as can be understood by those skilled in the art. The computer readable memory may be associated with, coupled to, or included in a computer or processor configured to execute instructions contained in a computer program stored in the computer readable memory and relating to various functions associated with the computer.

### Examples of Determining Pest Management Illumination Patterns

Now that some embodiments of the technology have been described, some nonlimitative examples illustrating potential implementations of the techniques for determing pest management illumination patterns will be presented. It should be noted that these examples serve an illustrative purpose only and should therefore not be considered limitative.

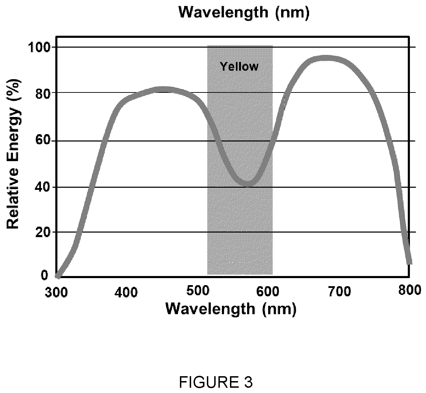

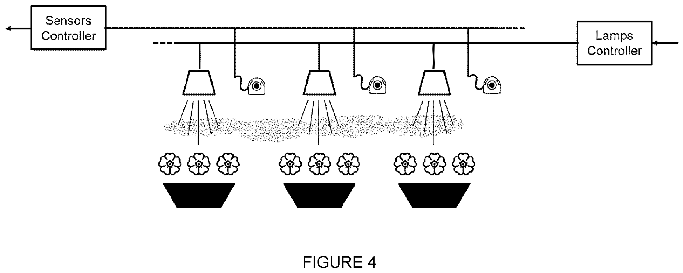

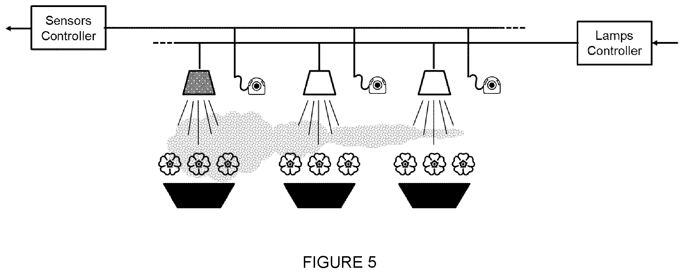

According to a first example, and with reference to Figures 3 to 5, a grower may want to control or manage aphids' population within the horticultural structure. Aphids are known to be harmful to tomatoes, as their piercing mouthparts can damage the plant by sucking its nutrients from the leaves and stems. Aphids feed on the sap of the plants, which can damage the plant, and eventually kill it. The presence of aphids within a horticultural structure is associated with mitigated growth and lower yields than expected. The Multicolored Asian Lady Beetle (Harmonia axyridis) is an example of aphids' predators. In the context of this first example, the grower may want to identify an efficient color pattern capable of attracting and stimulating the presence Multicolored Asian Lady Beetles in the context of tomato culture. According to Kemp *et al.* (2015), various research papers present that Adult Coccinellidae can be captured in the field using yellow traps (see for example Maredia *et al.* (1992), Hoffmann (1997), Mensah (1997), Stephens and Losey (2004), Hesler and Kieckhefer (2008), Schmidt et *al*. (2008) , Galvan *et al*. (2009) , Gardiner *et al.* (2009), Wang *et al.* (2011), Gadino *et al.* (2012), Rodriguez-Saona (2012), Kaneko 2013 and Hoddle *et al.* (2013)). Based on that information, the user elaborates a discovery strategy, which will now be described. A baseline spectrum will be used to illuminate plants so that they achieve the desired photosynthetic growth. A validation process will be devised to test the impact of a 5% decrease in energy between 570 nm to 580 nm, from the 45% energy generated by the baseline spectrum up to 100%. The percentage of Multicolored Asian Lady Beetle mobility toward lamps with altered spectrum will be measured. The validation process includes testing numerous combinations of yellow treatment durations and collecting data about Multicolored Asian Lady Beetle mobility and retention under all illumination and treatment durations combinations. In this example, the experimental environment includes three lamps capable having adjustable spectral properties, notably in terms of spectrum and intensity. The three lamps are installed over three tomato plants clusters, with three camera-based sensors positioned to detect Multicolored Asian Lady Beetle presence relative to the tomato plant clusters. The lamps and the plants are arranged side by side in a linear manner. The test environment is populated with Multicolored Asian Lady Beetles. The system user interface is used by the grower to program computer instructions and configure the details of the execution of the discovery methodology. As the experimentation goes through iterations, the effectiveness of the influence of specific lighting and duration combinations can be automatically assessed using data obtained from the sensors. The data is saved for further review and can also be used to alter the direction of the discovery strategy. For instance, the strategy could be programmed to prioritize tests based on the most promising patterns and durations. The system can be programmed to use techniques such as logic programming, trial and error, statistical correlation, machine learning, deep learning and any other learning strategy to perform the discovery process. The system allows the grower to validate hypotheses involving many samples, experiments that would be otherwise too tedious and, in some cases, unrealistic to perform manually.

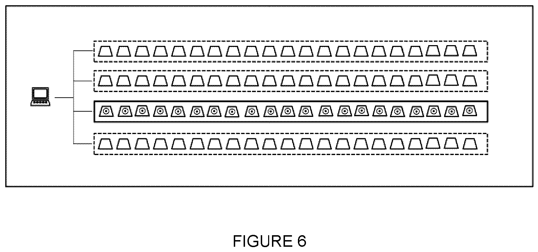

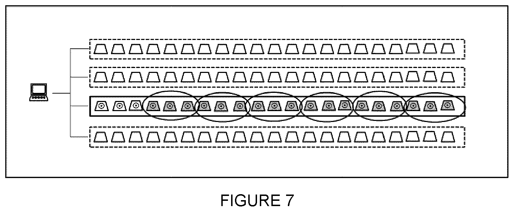

According to a second example, and with reference to Figures 6 and 7, a grower has been successfully using Green Lacewing larvae to manage the presence of whiteflies and thrips across its cucumber production growth environment. Green Lacewing larvae are active predators of soft-bodied insect pests. In this second example, the grower has observed that biological control of pest is less efficient during the summer, and that it is during that period that the population of natural Green Lacewing larvae is significantly reduced. Green Lacewing are known to be nocturnal living organisms. Duelli (1986) found that the key factor associated with flight activity of all lacewing species were darkness (or light) and that the light intensity threshold for flight activity is about 10 Lux. Thus, lacewings sitting in dark places during daytime will get active at about 10 lux. Based on that information, the grower may assume that shorter duration of summer nights leaves less time for adult Green Lacewing to procreate and for larvae to feed on pests. Following this observation, the greenhouse operator has devised a plan to identify light recipes that would trigger lacewings activity earlier in the evening; experiment various light recipes that could trigger lacewings activity earlier in the evening to accelerate discovery, multiple light pattern candidates will be validated in parallel, in individual virtual test areas; and to execute the plan during normal production cultivation cycles. In the context of this second example, the greenhouse includes multiple cultivation rows. For financial and technical reasons, only one row is equipped with sensors capable of capturing data about insects' location and activity. In order to implement the discovery strategy, the sensing enabled row is virtually divided into seven sub-sections. Six of the seven sub-sections will be used to validate light recipes candidates. The other section will be used for control and execute the baseline light recipe. Four days will be allocated for validating a light pattern candidate. It is anticipated that 20 days of the growth cycle will be available for validation, resulting in the possibility to test 30 light recipes candidates during a single growth cycle. The discovery plan is implemented in two parallel threads. The first thread will look at bees' activity patterns and use inferential statistics to make a model of relationships between bees' activity in relation to specific light sources used in the test and spectral characteristics of said light source. The second thread will validate the light patterns candidates within the six virtual sub-sections of the sensor-enabled rows. Sensor data collected in these sub-sections is also absorbed by the first thread. The system user interface can be used by the experimenter to program computer instructions and configure the details of the execution of the discovery methodology. This experimental approach made possible by this innovation makes it possible to perform large numbers of observations, correlation and experimentations that would otherwise be almost impossible to do manually. Additionally, in this case, the discovery methodology is entirely automated and seamlessly integrated with the production cycle.

### Assisting Pest Management

In accordance with one aspect, there is provided a system for assisting pest management within a horticultural structure, the system including: a first horticultural light source configured to illuminate a first group of plants or crops according to a lighting scenario; a second horticultural light source configured to illuminate a second group of plants or crops according to a pest management lighting scenario, the pest management lighting scenario having at least one pest-mitigating feature affecting an undesirable organism present in the second zone; and at least one controller in data communication with the first horticultural light source, the second horticultural light source and said at least one sensor, said at least one controller being configured for: defining the first zone within the horticultural structure; and defining the second zone within the horticultural structure.

In some embodiments, the system includes at least one sensor configured to monitor a distribution of undesirable organism within the second zone to determine whether said at least one pest-mitigating feature affects the distribution of undesirable organism within the second zone in comparison with the first zone.

In some embodiments, the system includes at least two lamp fixtures adapted to generate variable spectrum output and/or have variable intensity capabilities. In these embodiments, the system also includes one or more sensors adapted to detect the presence and activity of natural predators, and their relative location in relation with the lamp fixtures (as illustrated in US 2021/0360204). Optionally, the system may include one or more sensors adapted to detect characteristics associated with the natural predators, such as species, sex, physiological state, and other characteristics. In these embodiments, the system includes a first controller capable of controlling individual fixtures' visible and non-visible light spectrum output and intensity and a second controller capable of receiving sensor information. Of note, the first and second controllers could be implemented in a single controller or could otherwise be independent one from another. In these embodiments, the lamps fixtures, sensors and controllers are in data communication, using either wired connections or wireless connections. It should be noted that the expression "data communication" may refer to any types of direct connection and/or indirect connection. For example, the communication between the elements may be achieved through direct communication such as a wired connection or via a network allowing data communication between devices or components of a network capable of receiving and/or sending data, which may include, to name a few, publicly accessible networks of linked networks, possibly operated by various distinct parties, such as the Internet, private networks (PN), personal area networks (PAN), local area networks (LAN), wide area networks (WAN), cable networks, satellite networks, cellular telephone networks and the like, or any combinations thereof.

In some embodiments, the system also includes a user interface allowing an end user to enter a pattern discovery strategy, for instance, in the form of a programming language or a visual programming interface. The system can be programmed to use techniques such as logic programming, trial and error, statistical correlation, machine learning, deep learning and any other learning strategy to perform the discovery process. In these embodiments, the system also includes a processor capable of using the sensor data to measure natural predators' response to the light patterns with regards to natural predator's attraction, retention, stimulation and repulsion, alter and execute light patterns on lamps fixtures.

The embodiments of the horticultural structure illustrated in the Figures include at least two zones, namely the first zone and the second zone. Each zone may include one or more rows of plants or crops. Each zone is designed or configured to accommodate the plants or crops during one or more plant growth stages (or portions thereof).

In some embodiments, the first and second horticultural light sources may be embodied by a lamp similar to the lighting system described in WO 2016119063, the content of which is incorporated herein by reference.

The controller(s) are configured to send illumination instructions to one of the horticultural light sources, such that the corresponding horticultural light source is driven according to a lighting scenario to meet the lighting conditions of the plants or crops. In some embodiments, each horticultural light source includes a dedicated controller, and each dedicated controller is operatively connected to a user interface. The user interface may be configured to select one of horticultural light source, receive information about the illumination sequence or the lighting scenario being provided by the selected horticultural light source during portion(s) of a lighting scenario and/or send illumination instructions to the selected horticultural light source. As such, the user interface may be in data communication with each dedicated controller of the horticultural light sources through a corresponding communication channel. Of note, the dedicated controller of each horticultural light source may communicate with the user interface over a network. The term "network", synonyms and derivatives thereof are used to refer to any classes of network, which includes publicly accessible networks of linked networks, possibly operated by various distinct parties, such as the Internet, private networks, personal area networks, local area networks, wide area networks, cable networks, satellite networks, cellular telephone networks or any combinations thereof.

In some embodiments, the user interface may be a graphical user interface. In some embodiments, the user interface may be a conversational interface, which may rely on natural language, text-activated commands and/or voice-activated commands. The user interface is operatively connected to at least one of the horticultural lighting sources through at least one controller to allow a user to interact with the horticultural lighting sources. In some embodiments, the user interface may be displayed on a display or a screen. In some embodiments, the graphical user interface may be part of a web-based application that may be accessed and displayed using a computing device connected to the Internet or any types of networks. The user interface may also be configured to illustrate the paths followed by the natural enemies and/or undesirable organisms, or mapping of the same, which may help identifying optimal lighting conditions managing the presence of pest or natural enemies and/or undesirable organisms in a horticultural structure.

In some embodiments, the system may include a memory, or may include or be connected to a database (e.g., through the controller) to store past lighting scenarios or illumination conditions of the plants or crops, calibration data, other relevant data, as well as the impacts of these parameters on the management of pest or undesirable organism. In some embodiments, the lighting scenarios may be provided in a dataset including a plurality of sets of control parameters for the horticultural light sources. Each set of control parameters may be associated to an illumination state of the horticultural light source, and associated with the impact on the presence of undesirable organism. The dataset may be stored as a relational database and may have a database format commonly used in the art, such as Domino, SQL, SCSV, Office 365, or the like. The dataset may comprise textual information, numeral information, time information, date information, image information, and any combinations thereof. In the context of controlling horticultural light, the control parameters may include the different driving parameters of the horticultural light.

The system having been described may be implemented in computer programs executed on programmable computers. A programmable computer generally includes at least a processor and a data storage system that may include volatile and non-volatile memory and/or storage elements. The programmable computer may be a programmable logic unit, a mainframe computer, server, and personal computer, cloud-based program or system, laptop, personal data assistance, cellular telephone, smartphone, wearable device, tablet device, virtual reality devices, smart display devices, set-top box, video game console, portable video game devices, or virtual reality device. In some embodiments, the systems and methods may be provided as a plug-in. In some embodiments, one or more components of the system having been described may be provided as a plug-in. The expression "plug-in" herein refers to a software component adding a predetermined feature or functionality to the system. Providing the different modules as plug-ins may be associated with some benefits, such as, for example and without being limitative, adaptability, modularity and flexibility.

Of note, the computer programs may be implemented in a high-level procedural or object-oriented programming and/or scripting language to communicate with a computer system. The programs could alternatively be implemented in assembly or machine language, if desired. In these implementations, the language may be a compiled or interpreted language. The computer programs are generally stored on a storage media or a device readable by a general or special purpose programmable computer for configuring and operating the computer when the storage media or device is read by the computer to perform the procedures described herein. In some embodiments, the systems may be embedded within an operating system running on the programmable computer.

In accordance with one aspect, there is provided a method for assisting pest management within a horticultural structure, the method including: defining a first zone within the horticultural structure, the first zone being associated with a first horticultural light source, the first horticultural light source being configured to illuminate a first group of plants or crops according to a lighting scenario; defining a second zone within the horticultural structure, the second zone being associated with a second horticultural light source, the second horticultural light source being configured to illuminate a second group of plants or crops according to a pest management lighting scenario, the pest management lighting scenario having at least one pest-mitigating feature affecting an undesirable organism present in the second zone; in the first zone, illuminating the first group of plants or crops with the first horticultural light source according to the lighting scenario; and in the second zone, illuminating the second group of plants or crops with the second horticultural light source according to the pest control lighting scenario.

In some embodiments, the method includes monitoring a distribution of undesirable organism within the second zone to determine whether said at least one pest-mitigating feature affects the distribution of undesirable organism within the second zone in comparison with the first zone.

In some embodiments, defining the first zone and the second zone may include creating the zones, delimiting their limits, adjusting their dimensions, and the like. These steps may be carried out through the user interface. For example, the user interface may be configured to display a representation of the horticultural structure and the horticultural light sources, interact with the representation of the horticultural structure (and components). The user interface may further be configured to create, delete, duplicate, replicate, edit and/or reorganize the zones, based on the plants or crops present in the horticultural structure and their needs.

In some embodiments, the method may include monitoring or tracking the lighting scenarios or recipes according to which the horticultural lighting sources are driven to provide information on the past, actual and/or forecasted lighting scenarios. This information may be correlated with the presence or absence of pest or undesirable organism. In some embodiments, the method may include editing or adjusting the lighting scenario based on the correlation between the illumination conditions during the lighting scenarios and their impacts on the management of pest or undesirable organism within the horticultural structure.

In accordance with another aspect of the present description, there is provided a non-transitory computer readable storage medium having stored thereon computer executable instructions that, when executed by a processor, cause the processor to perform the methods that have been previously described. The non-transitory computer storage medium can be integrated to the systems or assemblies that have been described in the present description. The non-transitory computer storage medium could otherwise be operatively connected with the systems or assemblies. In the present description, the terms "computer readable storage medium" and "computer readable memory" are intended to refer to a non-transitory and tangible computer product that can store and communicate executable instructions for the implementation of various steps of the method disclosed herein. The computer readable memory can be any computer data storage device or assembly of such devices, including random-access memory (RAM), dynamic RAM, read-only memory (ROM), magnetic storage devices such as hard disk drives, solid state drives, floppy disks and magnetic tape, optical storage devices such as compact discs (CDs or CDROMs), digital video discs (DVD) and Blu-Ray^{™} discs; flash drive memory, and/or other non-transitory memory technologies. A plurality of such storage devices may be provided, as can be understood by those skilled in the art. The computer readable memory may be associated with, coupled to, or included in a computer or processor configured to execute instructions contained in a computer program stored in the computer readable memory and relating to various functions associated with the computer.

### Examples of Assisting Pest Management

Now that some embodiments of the technology have been described, some nonlimitative examples illustrating potential implementations of the techniques for assisting pest management within a horticultural structure will be presented. It should be noted that these examples serve an illustrative purpose only and should therefore not be considered limitative.

According to a first example, a tomato grower can use Multicolored Asian Lady Beetles as natural enemies to control Aphids across its production growth environment. Aphids can be very harmful to tomatoes. Aphids have piercing mouthparts that allow them to suck out the plant's nutrients from its leaves and stems. They feed on the sap of the plant, which can damage or even kill it. This can stunt the tomato plant's growth and lead to lower yields. The Multicolored Asian Lady Beetle can eat or feed on aphids. The population of Multicolored Asian Lady Beetles that is manageable in the context of the facility is of limited size. Empirical observations have demonstrated that biocontrol using this population gives better results when it is concentrated over smaller areas. In the context of this grow facility, to achieve the desired level of concentration for optimal pest control activity, the controlled agriculture environment is divided into 3 virtual sections. During the growth cycle, each section under treatment is illuminated, one after the other, in a round-robin manner, using an enhanced light spectrum having a spectral feature comprising a spectral peak in the 570-580 nm range that is combined with a photosynthetic light spectrum. While untreated sections are illuminated using the base photosynthetic light spectrum, the enhanced spectrum rendered above the concentration section favors attraction of Multicolored Asian Lady Beetle towards the target section and stimulates their predatory activity there. The process is repeated independently for all sections, thus ensuring an optimal biocontrol coverage.

According to a second example, a tomato grower can use Predator mites (Phytoseiulus persimilis) as natural enemies to control Spider Mites across its greenhouse growth environment. The mites suck juices from the plants, causing the plants to look dull and unhealthy. Mites also cause plants to lose vigor so that they may be unable to overcome a severe infestation, resulting in the plant's death. The greenhouse operator experiences recurrent Spider mites' infestations. The greenhouse operator has observed that Spider mites' infestations always appear on crops located in the area close to the facility doorways, which are known in the practice to be entry points for pests. Rigorous scouting and monitoring of pests in the greenhouse have revealed that initial outbreaks tend to appear over a certain group of plants close to the facility entry points. The recurrent initial outbreak area was documented and mapped. It has been demonstrated that far-red light stimulates spider mites in greenhouse tomatoes due to increased population buildup (Effects of far-red light on tritrophic interactions between the two-spotted spider mite (Tetranychus urticae) and the predatory mite Phytoseiulus persimilis on tomato, Meijer, 2023). The greenhouse operator has implemented a preventive strategy. The strategy consists of emitting a specific light treatment over the typical outbreak area. The illumination treatment occurs for 1 hour every day after the end of the daily photoperiod. The illumination spectrum is not combined with any photosynthetic light spectrum and only contains far red. The far-red light spectrum attracts and concentrates predatory mites population over the problematic area, resulting in a strengthened first line defense against spider mites.

Several alternative embodiments and examples have been described and illustrated herein. The embodiments described above are intended to be exemplary only. A person skilled in the art would appreciate the features of the individual embodiments, and the possible combinations and variations of the components. A person skilled in the art would further appreciate that any of the embodiments could be provided in any combination with the other embodiments disclosed herein. The present examples and embodiments, therefore, are to be considered in all respects as illustrative and not restrictive. Accordingly, while specific embodiments have been illustrated and described, numerous modifications come to mind without significantly departing from the present disclosure and the appended claims.

## Claims

1. A method for determining pest management illumination patterns within a horticultural structure, the method comprising:
defining a control zone within the horticultural structure, the control zone being associated with a first horticultural light source, the first horticultural light source being configured to illuminate a control plant or crop according to a control lighting scenario;
in the control zone, illuminating the control plant or crop with the first horticultural light source according to the control lighting scenario;
defining a plurality of test zones within the horticultural structure, each test zone being associated with a corresponding horticultural light source;
for each test zone of the plurality of test zones:
identifying an undesirable organism in the test zone;
providing a natural predator to the undesirable organism in the horticultural structure to affect the presence of the undesirable organism in the test zone; and
illuminating a respective test plant or crop according to a corresponding test lighting scenario with said corresponding horticultural light source, the corresponding test lighting scenario having at least one test optical property affecting a behavior of the natural predator, said at least one test optical property being different from one test zone to another.

2. The method of claim 1, further comprising monitoring an impact of said at least one test optical property on the undesirable organism and/or the natural predator in the corresponding test zone.

3. The method of claim 2, further comprising comparing the impact of said at least one test optical property to determine the pest illumination patterns to be used to reduce or eliminate a population of the undesirable organisms.

4. The method of claim 1, wherein defining the control zone comprises creating the control zone, delimiting the limits of the control zone and/or adjusting the dimensions of the control zone.

5. The method of claim 1, wherein defining the plurality of test zones comprises creating the plurality of test zones, delimiting the limits of plurality of test zones and/or adjusting the dimensions of the plurality of test zones.

6. The method of claim 1, further comprising adjusting the control lighting scenario and/or the corresponding test lighting scenario, based on a correlation between illumination conditions during the control lighting scenario and the corresponding test lighting scenario and impacts of the illumination conditions on the presence or absence of the undesirable organisms.

7. A system for determining pest management illumination patterns within a horticultural structure, the system comprising:
a first horticultural light source configured to illuminate a control plant or crop according to a control lighting scenario in a control zone;
a plurality of test horticultural light sources in a plurality of test zones, each being configured to illuminate a respective test plant or crop according to a corresponding test lighting scenario in a corresponding test zone, the corresponding test lighting scenario having at least one test optical property affecting a behavior of a natural predator to an undesirable organism in the test zone, said at least one test optical property being different from one test zone to another;
at least one controller in data communication with the first horticultural light source, the plurality of horticultural light sources and said at least one sensor, said at least one controller being configured for:
defining the control zone within the horticultural structure;
defining a plurality of test zones within the horticultural structure;
providing the control lighting scenario to the first horticultural light source in the control zone and the corresponding test lighting scenario to the corresponding horticultural light source.

8. The system of claim 7, further comprising at least one sensor configured to monitor an impact of said at least one test optical property on the undesirable organism and/or the natural predator in the corresponding test zone in the plurality of test zones.

9. The system of claim 8, wherein said at least one controller is configured to compare the impact of said at least one test optical property to determine the pest illumination patterns to be used to reduce or eliminate a population of the undesirable organisms.

10. The system of claim 7, further comprising one or more sensors configured to detect characteristics associated with the natural predators.

11. The system of claim 10, wherein the characteristics comprise at least one of a species of the natural predator, a sex of the natural predator and a physiological state of the natural predator.
